# FASCICULE DE BREVET EUROPEEN

(11) **EP 1 893 484 B1**
(45) Date de publication et mention de la délivrance du brevet: **03.11.2010**
(21) Numéro de dépôt: 06778954.5
(22) Date de dépôt: 19.06.2006
(51) Int. Cl.: B64D 15/12, F02C 7/047

(54) **SYSTEME D'ANTI-GIVRAGE ET DE DEGIVRAGE DE NACELLE DE MOTEUR D'AERONEF A TAPIS RESISTIF**
ANTIVEREISUNGS- UND ENTEISUNGSSYSTEM FÜR EIN FLUGZEUGMOTORENGEHÄUSE MIT WIDERSTANDSMATTE
ANTI-ICING AND DE-ICING SYSTEM FOR AIRCRAFT ENGINE POD WITH RESISTIVE MAT

(30) Priorité: 22.06.2005 FR 0551712; 22.06.2005 FR 0551711; 22.06.2005 FR 0551713
(43) Date de publication de la demande: 05.03.2008
(73) Titulaire: AIRBUS OPERATIONS (S.A.S), 31060 Toulouse (FR)
(72) Inventeur: CHENE, Gilles, F-31100 Toulouse (FR); PORTE, Alain, F-31770 Colomiers (FR); LALANE, Jacques, F-31650 Saint Orens (FR)
(74) Mandataire: Schmit, Christian Norbert Marie
(86) Numéro de dépôt international: PCT/FR2006/050608
(87) Numéro de publication internationale: WO 2006/136748

(56) Documents cités:
- EP-A- 0 749 894
- EP-A- 1 495 963
- GB-A- 1 115 023
- GB-A- 2 259 287
- US-A- 2 686 640
- US-A- 4 788 417
- US-B1- 6 227 492
- US-B1- 6 338 455

## Description

La présente invention concerne une nacelle de moteur d'aéronef à système d'anti-givrage et de dégivrage perfectionné et atténuation acoustique optimisée basé sur des tapis résistifs ségrégués.

Il est connu, par example du document EP 1 495 963, de réaliser des nacelles d'aéronefs, dont le conduit interne entoure une soufflante, comportant une entrée d'air tubulaire pourvue d'une lèvre et un carter de soufflante pourvu d'une première pièce tubulaire interne d'atténuation acoustique, pour lesquelles une partie tubulaire de transition relie l'entrée d'air au carter de soufflante.

Le dégivrage de l'entrée d'air et de la lèvre se fait traditionnellement par l'amenée, au niveau de l'entrée d'air, d'air chaud sortant du réacteur par des tubulures ou des passages disposés dans l'épaisseur de la nacelle.

Un problème technique vient du fait que l'air chaud amené est, dans certaines conditions de vol, à très haute température (jusqu'à 600°C) et du fait que la ou les pièces tubulaires d'atténuation acoustique réalisées avec des matériaux composites ne sont pas compatibles avec de telles températures.

Le dégivrage est particulièrement nécessaire lors des descentes de l'avion et notamment lors des longues finales pendant lesquelles les moteurs sont au ralenti sur une longue période. Dans de tels cas la température de l'air dans les conduits d'amenée d'air chaud est faible et un flux d'air important est nécessaire.

Ce dimensionnement implique que, a contrario, dans le cas où la température extérieur est élevée et le moteur en phase de poussée, si la vanne de régulation du flux d'air de dégivrage est ouverte l'air atteint les températures élevées précitées. Ceci est particulièrement le cas lorsque la vanne est verrouillée en position ouverte pour permettre un vol dans un cas de panne du système de commande de la vanne.

Réduire la température de l'air dans les phases où une chaleur trop importante est à éviter est très complexe car, dans la technique antérieure, les systèmes de dégivrage à air chaud doivent être dimensionnés pour permettre un dégivrage du moteur dans les phases où il tourne au ralenti et réaliser un dispositif permettant de refroidir l'air dans des circonstances particulières nécessiterait un appareillage complexe (échangeur de chaleur, vanne, régulateur et autres éléments) volumineux et lourd.

Aussi, dans la technique antérieure, il a été préféré d'éloigner la partie d'atténuation acoustique sensible à la chaleur de la partie dégivrée et pour ce faire la partie tubulaire de transition comprend une zone de jonction entre l'entrée d'air et le carter de soufflante dépourvue de moyens de dégivrage de façon à éloigner la partie tubulaire pourvue de moyens d'atténuation acoustique de la partie réchauffée.

Cette construction pose en particulier deux problèmes, le premier est qu'une section annulaire de l'entrée d'air est dépourvue de matériau d'atténuation acoustique, ce qui diminue l'efficacité de ces moyens de réduction de bruit, le deuxième est que cette même section annulaire est dépourvue de moyens de dégivrage et reste donc potentiellement sensible à l'accumulation de givre.

Le système de dégivrage de la présente invention a pour objet de permettre un rapprochement et même un recouvrement entre les zones d'atténuation acoustique et les zones dégivrées et procure en outre une réduction des pertes de charge moteur sachant que pour un moteur d'aéronef civil de puissance habituelle le système d'anti-givrage à air chaud de l'art antérieur prélève une puissance de l'ordre de 60 à 80kW sur la puissance moteur sans réel moyen de régulation ou de limitation.

Le dispositif de dégivrage de la présente invention a aussi pour objet de réduire notablement, voire même de supprimer, la section annulaire de transition et de rapprocher et même de mettre en recouvrement la partie dégivrée et la partie pourvue de moyens d'atténuation acoustique afin d'accroître tant la surface dégivrée que la surface munie de moyens d'atténuation acoustique.

De plus le dispositif de dégivrage selon la présente invention disposé en surface ne nécessite pas de systèmes complexes de conduites et de vannes.

En outre le système pneumatique de l'art antérieur permet de faire de l'anti-givrage mais pas de dégivrage de manière simple et facilement mise en oeuvre alors que le système de la présente invention permet de dégivrer des zones particulières en envoyant temporairement une puissance nécessaire à ce dégivrage, la puissance consommée étant adaptée en fonction des modes anti-givrage et dégivrage choisis.

L'invention propose de réaliser un système de dégivrage et d'anti-givrage ne prenant pas de place à l'intérieur de la nacelle, peu consommateur et offrant une grande souplesse d'emploi par une adaptation des puissances de dégivrage aux conditions de vol et aux conditions au sol.

Dans ce cadre, l'invention prévoit un système de dégivrage et d'anti-givrage de nacelle de moteur d'aéronef, comportant une entrée d'air pourvue d'une lèvre suivie d'une pièce tubulaire d'entrée d'air, munie d'un premier panneau d'atténuation acoustique, **caractérisé en ce qu**'il comporte des moyens de dégivrage constitué par au moins un réseau d'éléments résistifs chauffants noyés dans un matériau isolant électrique, les moyens de dégivrage étant sous forme d'un tapis incorporant les éléments résistifs dans l'épaisseur de la lèvre d'entrée d'air.

Selon un mode de réalisation particulier, l'invention prévoit une nacelle de moteur d'aéronef, comportant une entrée d'air pourvue d'une lèvre suivie d'une pièce tubulaire d'entrée d'air, munie d'un premier panneau d'atténuation acoustique, **caractérisé en ce que** la lèvre est munie d'un système de dégivrage pourvu d'un système de dégivrage qui comporte des moyens de dégivrage constitué par au moins un réseau d'éléments résistifs chauffants noyés dans un matériau isolant électrique, les moyens de dégivrage étant sous forme d'un tapis incorporant les éléments résistifs dans l'épaisseur de la lèvre d'entrée d'air le réseau formant partie de la paroi de la lèvre, recouvrant une partie de la lèvre, interne à l'entrée d'air, et, s'étendant d'une part sur au moins une partie de la lèvre, externe à l'entrée d'air, et, d'autre part sur au moins une zone de jonction entre la lèvre et le premier panneau d'atténuation acoustique de la pièce tubulaire d'entrée d'air.

plus particulièrement, l'entrée d'air est segmentée en une succession de secteurs de dégivrage constituant une succession de sous-réseaux pilotés par au moins un circuit de commande adapté à réaliser soit un réchauffage séquentiel des secteurs soit une alimentation simultanée de certains secteurs.

Selon un mode de réalisation préférentiel de l'invention le système de dégivrage selon comporte des moyens de dégivrage constitué par au moins deux réseaux d'éléments résistifs chauffants noyés dans un matériau isolant, au moins deux séries d'éléments résistifs desdits réseaux étant ségrégués en sorte de réaliser deux réseaux ségrégués intégrés dans l'épaisseur d'un panneau à dégivrer.

Le système de dégivrage selon l'invention comprend avantageusement des circuits de commande des réseaux, comportant deux canaux indépendants assurant le contrôle de l'alimentation électrique des deux réseaux résistifs.

L'invention concerne en outre un procédé de commande d'un système de dégivrage et d'anti-givrage d'une entrée d'air de nacelle de moteur d'aéronef **caractérisé en ce qu'**on segmente l'entrée d'air en une succession de secteurs de dégivrage, on commande une succession de réseaux résistifs disposés dans les secteurs de dégivrage par au moins un circuit de commande adapté à alimenter simultanément ou séquentiellement lesdits secteurs.

Outre le gain de souplesse de fonctionnement que procure le système selon l'invention, un tel système est particulièrement adapté pour permettre d'augmenter l'isolation acoustique d'entrée d'air réalisées en matériaux composites, du fait qu'un tel système ne soumet pas son environnement à des températures élevées même dans le cas de fonctionnement en mode dégradé.

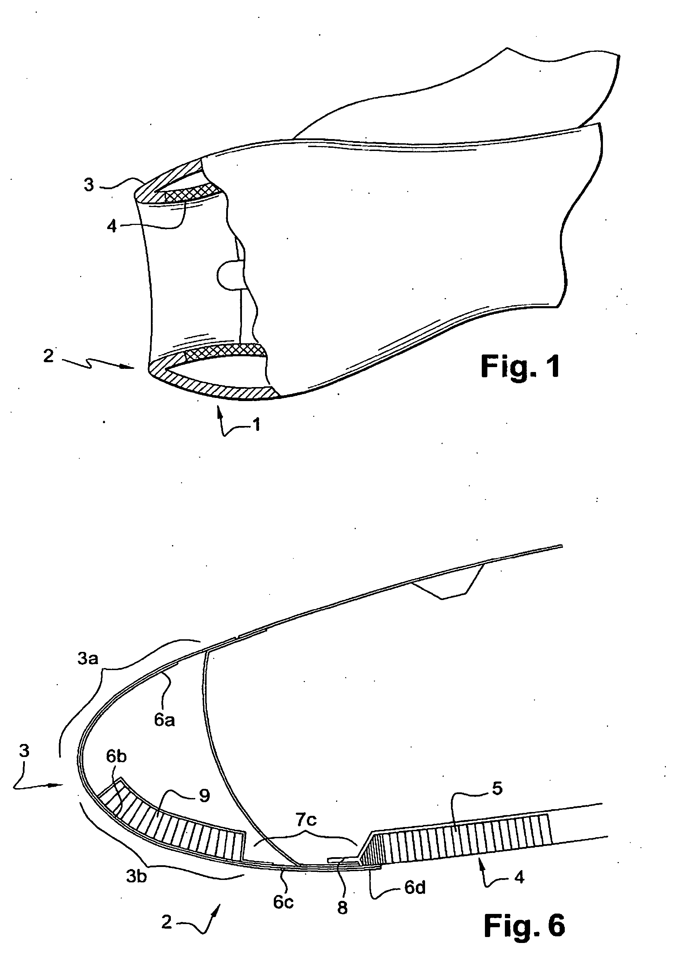

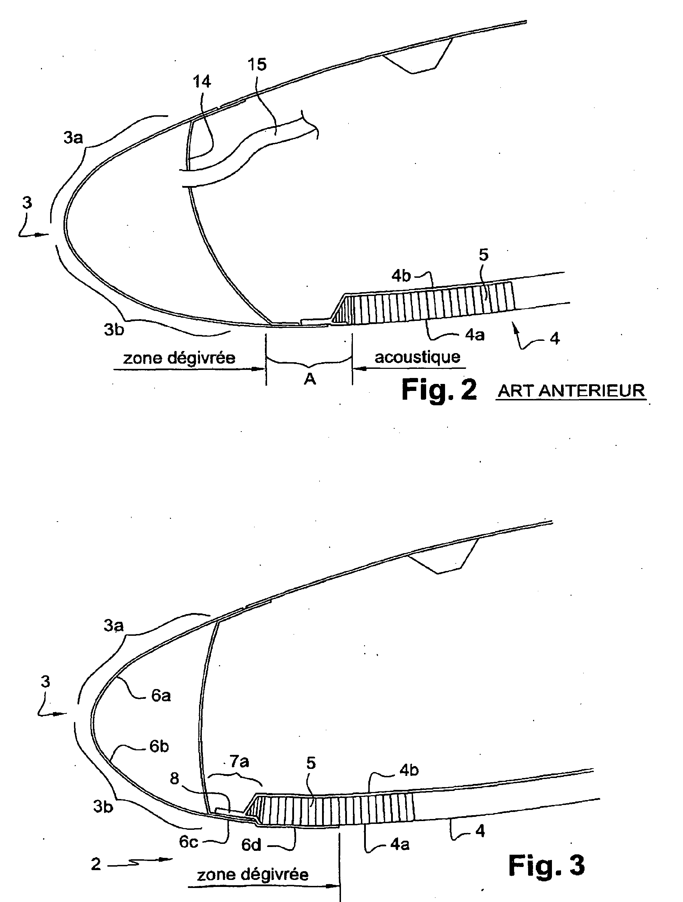

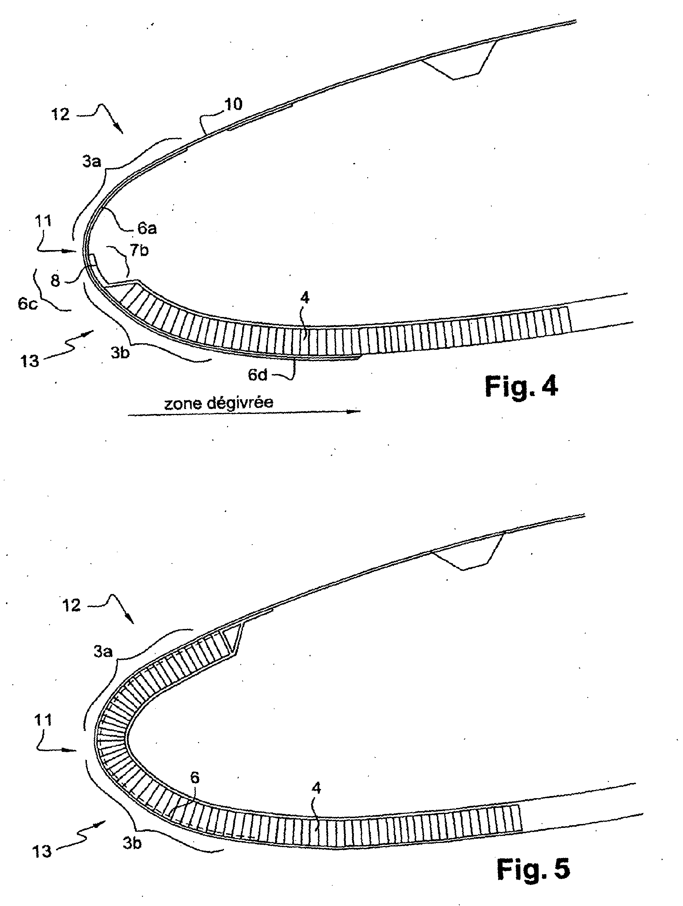

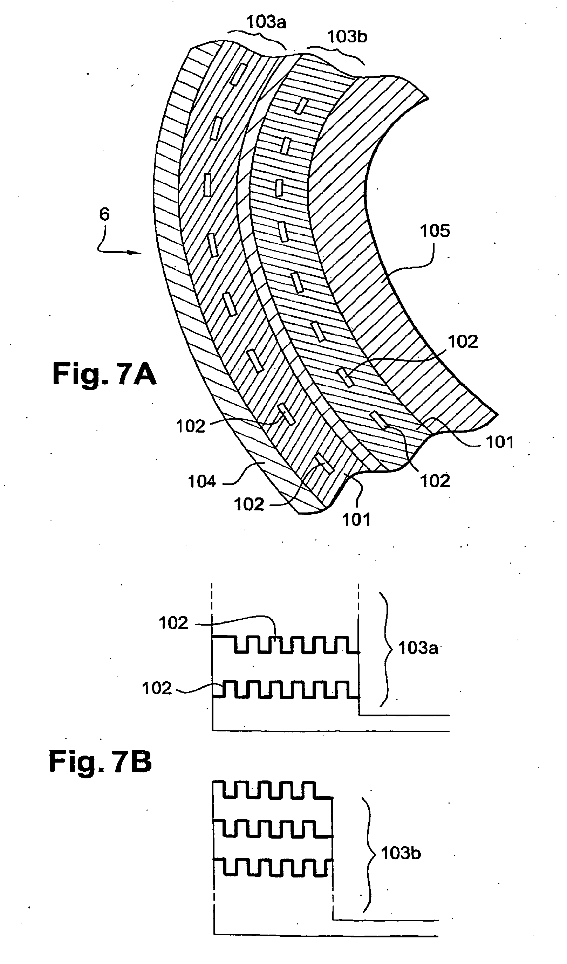

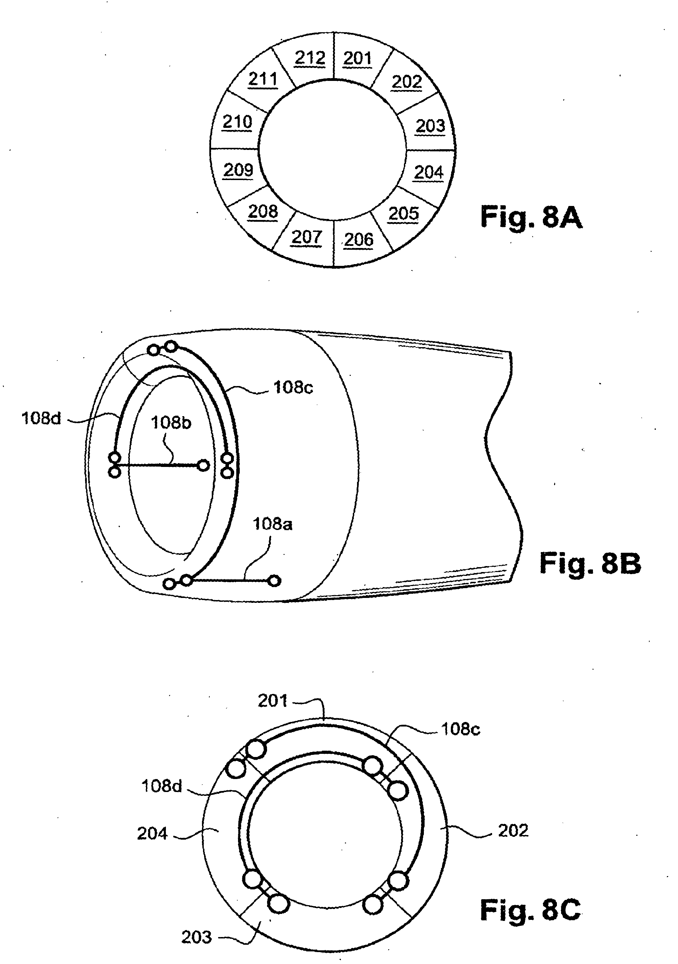

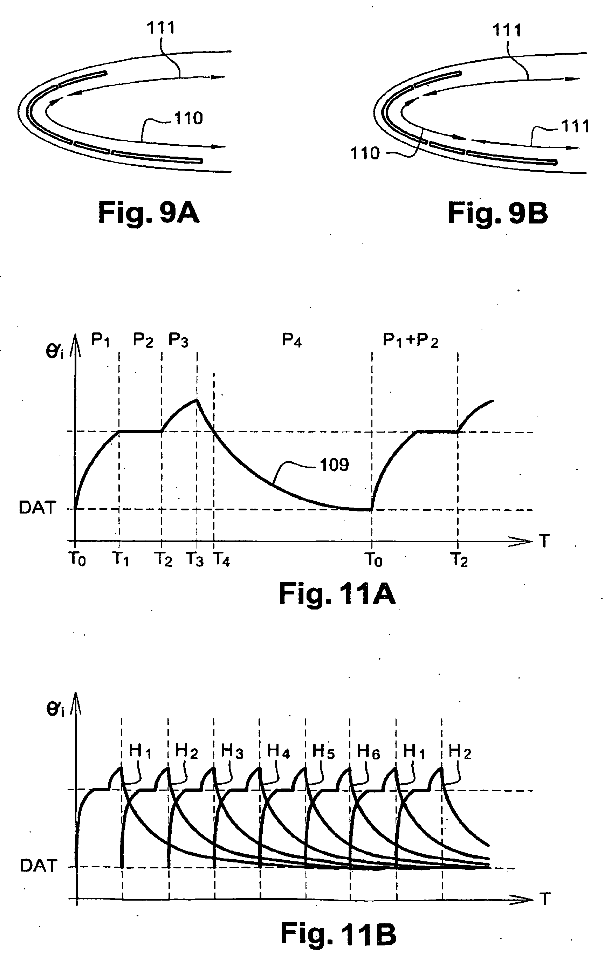

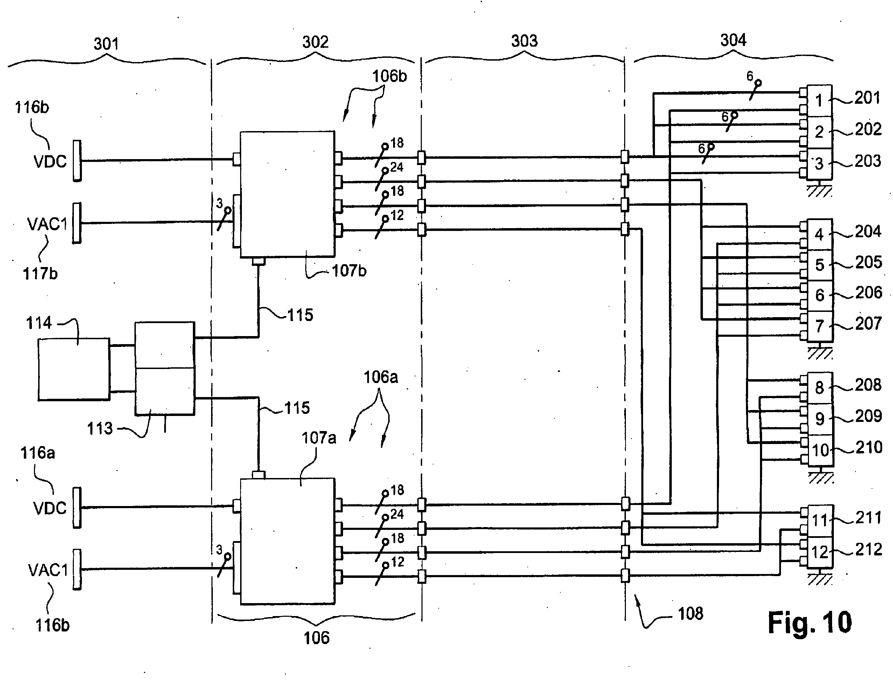

D'autres caractéristiques et avantages de l'invention seront mieux compris à la lecture de la description qui va suivre d'une exemple de réalisation non limitatif de l'invention en référence aux dessins qui représentent:
en figure 1: une vue d'ensemble d'une nacelle de moteur d'aéronef en coupe partielle;
en figure 2: une vue schématique en coupe d'une partie avant de nacelle selon l'art antérieur;
en figure 3: une vue schématique en coupe d'une partie avant de nacelle selon un premier exemple de réalisation de l'invention;
en figure 4: une vue schématique en coupe d'une partie avant de nacelle selon une première variante de réalisation de l'invention;
en figure 5: une vue schématique eh coupe d'une partie avant de nacelle selon une deuxième variante de réalisation de l'invention;
en figure 6: une vue schématique en coupe d'une partie avant de nacelle selon une troisième variante de réalisation de l'invention;
en figure 7A: une vue en coupe d'une réseau résistif selon un aspect de l'invention;
en figure 7B: un détail d'un réseau de la figure 7A,
aux figures 8A, 8B et 8C: des vues schématiques de secteurs d'entrée d'air munis d'un système de dégivrage selon l'invention;
aux figures 9A et 9B: une représentation schématique de deux modes de fonctionnement d'un système de dégivrage selon l'invention;
en figure 10: deux exemples de réalisation de systèmes de dégivrage conformes à l'invention;
aux figures 11A et 11B: deux exemples de cycles de fonctionnement d'un système de dégivrage selon l'invention.

L'invention concerne principalement le dégivrage et l'anti-givrage de parties d'aéronefs et en particulier des nacelles de moteurs de ces aéronefs.

Une nacelle 1 de moteur d'aéronef est représentée schématiquement de manière générale en figure 1.

Une telle nacelle 1 comporte une entrée d'air 2 pourvue d'une lèvre 3 suivie d'une pièce tubulaire 4 d'entrée d'air.

La partie avant d'une telle nacelle selon l'art antérieur est représentée en figure 2 où l'on voit que la partie tubulaire 4 comprenant un panneau d'atténuation acoustique est reculée par rapport à la lèvre 3 d'entrée d'air pour laisser une zone A tampon entre la partie dégivrée située en avant d'une cloison interne 14 et la partie pourvu du panneau d'atténuation acoustique 5 de façon à protéger ce panneau des hautes températures du dispositif de dégivrage à air chaud symbolisé par un conduit 15.

Selon les exemples de réalisation de l'invention des figures 3, 4 et 5, la nacelle comprend toujours une pièce tubulaire munie d'un premier panneau 5 d'atténuation acoustique en matériaux composites et, selon l'invention, la lèvre est munie de moyens de dégivrage 6, 6a, 6b, 6c, 6d formant partie de la paroi de la lèvre et remplaçant les moyens de dégivrage à air chaud.

Les moyens de dégivrage selon l'invention recouvrent une partie 3b de la lèvre, interne à l'entrée d'air, et s'étendent, d'une part sur une partie 3a de la lèvre externe à l'entrée d'air et, d'autre part, sur une zone de jonction 7a, 7b, 7c entre la lèvre et la pièce tubulaire d'entrée d'air.

Plus particulièrement et notamment selon l'exemple de réalisation de la figure 3, la zone de jonction 7a comporte une avancée 8 de la pièce tubulaire d'entrée d'air solidarisée à un bord interne d'un prolongement de la lèvre 3, les moyens de dégivrage 6c recouvrant ladite avancée 8.

La pièce tubulaire 4 en matériaux composites comporte une peau externe 4a et une peau interne 4b enserrant un matériau d'atténuation acoustique pour former ledit premier panneau 5 d'atténuation acoustique et l'avancée 8 est constituée d'un bord pincé des peaux externe et interne 4a, 4b, ces bords pincés étant solidarisés par collage ou polymérisation à chaud de résine imprégnant les peaux 4a, 4b comme connu dans les procédés de réalisation de panneaux acoustiques composites par exemple décrit dans le document EP 0 897 174 A1.

Selon l'exemple de la figure 4, la lèvre 3 est constituée d'un capot supérieur 10 formant l'extrado 12 de l'entrée d'air et se prolongeant au delà du bord d'attaque 11 de la lèvre, la pièce tubulaire 4 d'entrée d'air munie du premier panneau d'atténuation acoustique se prolongeant pour former une partie de l'intrado 13 de la lèvre 3. Selon cet exemple, les moyens de dégivrage formant partie de la paroi de la lèvre comportent un premier tapis 6a déposé sur la paroi interne du capot supérieur 10 et un second tapis déposé sur la face externe du panneau d'atténuation acoustique 5 de la pièce d'entrée d'air prolongée, la zone de jonction 7b se situant approximativement au niveau du bord d'attaque 11 de la lèvre 3.

Une telle construction a comme avantage de réaliser une zone d'atténuation acoustique continue depuis l'intérieur du moteur jusqu'au niveau du bord d'attaque de la lèvre ce qui est particulièrement favorable dans la lutte contre le bruit.

Selon l'exemple de la figure 5, la lèvre 3 est entièrement constituée d'un prolongement de la pièce tubulaire d'entrée d'air qui forme l'intrado 13, le bord d'attaque 11 et l'extrado 12 de la lèvre 3.

Selon l'exemple de la figure 6, selon laquelle la structure d'origine de l'entrée d'air de la figure 2 est conservée, les moyens de dégivrage 6d s'étendent au delà de la zone de jonction pour recouvrir au moins une partie de la pièce tubulaire d'entrée d'air.

Les moyens de dégivrage 6a couvrent la zone externe 3a de la lèvre, les moyens 6b la zone interne 3b de la lèvre ici pourvue d'une première zone acoustique 9, les moyens 6c couvrent une zone de jonction 7c entre la lèvre et l'entrée d'air et les moyens 6c une partie d'une seconde zone acoustique 5.

Les moyens de dégivrage 6, 6a, 6b, 6c, 6d représentés sont des moyens électriques et sont en particulier constitués d'un tapis incorporant des résistances chauffantes.

Pour protéger ce tapis, il est préférable de le disposer sur la surface interne de la lèvre au moins dans la partie de la pointe ou bord d'attaque exposée de la lèvre. Lorsque les moyens de dégivrage doivent recouvrir un panneau acoustique, le tapis peut par contre être posé sur la surface externe du panneau et être percé de trous pour permettre le fonctionnement du panneau d'atténuation acoustique en laissant un taux de surfaces ouvertes compatible avec l'atténuation acoustique désirée.

L'invention est particulièrement applicable aux nacelles d'aéronefs comportant des parties en matériaux composites et notamment pour lesquelles la pièce tubulaire d'entrée d'air 4 et les panneaux d'atténuation acoustique 5, 9 sont réalisés en matériaux composites.

Dans le cadre de la réalisation de moyens de dégivrage électriques, le dispositif est adapté à fonctionner en dispositif d'anti-givrage prévenant la formation de givre sur les surfaces à protéger ou en dispositif de dégivrage en sorte d'éliminer un dépôt de givre qui s'est accumulé sur la surface.

Un tel dispositif et système ainsi que leur fonctionnement sont décrits aux figures 7A à 11B.

Comme expliqué plus haut, et particulièrement dans le cas de moteurs de type turbofan une technique antérieure employée pour les systèmes de dégivrage est de prélever une puissance pneumatique sur le moteur pour acheminer de l'air chaud au travers d'une tuyauterie vers les zones à dégivrer.

Une telle technique repose sur la présence d'une puissance pneumatique suffisante et soustrayable à la puissance de poussée du moteur, sur la présence de dispositifs de vannes de commande et de systèmes électriques de pilotage de ces vannes et sur la présence d'une place suffisante pour faire passer les tuyauteries dans les nacelles.

Vis à vis de cet art antérieur complexe, le système comporte des éléments chauffants électriques noyés dans l'épaisseur des panneaux formant la lèvre d'entrée d'air 3 et la pièce tubulaire d'entrée d'air, pour réaliser un système de dégivrage d'une nacelle 1 de moteur d'aéronef, comportant une entrée d'air 2 pourvue d'une lèvre 3.

Comme représenté en figure 7A, les éléments chauffants électriques constituant les moyens de dégivrage 6, 6a, 6b, 6c, 6d sont constitué par au moins un réseau d'éléments résistifs 102 chauffants noyés dans un matériau isolant 101, les moyens de dégivrage étant sous forme d'un tapis 103a, 103b incorporant les éléments résistifs 102 dans l'épaisseur de la lèvre d'entrée d'air entre les panneaux 104, 105 la formant.

Les réseaux d'éléments résistifs 102 comprennent des résistances électriques chauffantes dissipant de la puissance électrique par effet Joule noyées dans le matériau isolant 101.

Les moyens de dégivrage sont soit des éléments résistifs métalliques, par exemple en cuivre, soit des éléments résistifs composites, par exemple des éléments en carbone.

L'isolant électrique recouvrant les éléments résistifs est un matériau souple notamment de type silicone ou néoprène.

Comme représenté en figure 7B les éléments résistifs 102 sont reliés en parallèle ce qui limite le risque de perte d'efficacité du système en cas de rupture d'un élément par exemple suite à un choc d'un objet contre l'entrée d'air.

Chaque élément résistif 102 est espacé des éléments adjacents d'une distance suffisante pour assurer une isolation électrique convenable (typiquement de l'ordre de 2 mm pour des tensions d'alimentations usuelles de 0 à 400V continu ou alternatif).

En outre, comme représenté en figure 7A, le réseau de réchauffeurs à éléments résistifs 102 est dupliqué en sorte de réaliser deux réseaux ségrégués 103a, 103b intégrés dans l'épaisseur de la lèvre.

Cette duplication des réseaux est réalisée de sorte qu'en cas de panne de l'un des réseaux la fonction de protection contre le givre soit assurée en mode dégradé par l'autre des réseaux.

Pour piloter ces réseaux, le système représenté comprend des circuits de commande 106, 106a, 106b des réseaux, comportant deux canaux indépendants assurant indépendamment le contrôle de l'alimentation électrique des deux réseaux résistifs 103a, 103b. Une représentation schématique de ces circuits de commande est données en figure 10 alors qu'un exemple de cheminement des câbles 108a, 108b, 108c, 108d d'alimentation, évitant de disposer des câbles dans la zone inférieure de l'entrée d'air la plus exposée, est donné aux figures 8B et 8C dans le cadre d'une segmentation de l'entrée d'air en quatre secteurs constituant quarte sous-réseaux 201, 202, 203, 204.

En effet, toujours dans un souci de sécurité, et en outre pour optimiser la consommation électrique du système, il est envisagé selon l'invention de segmenter l'entrée d'air en une succession de secteurs de dégivrage, 121 selon la figure 8A constituant une succession de sous-réseaux 201, ... , 212 pilotés séparément par au moins un circuit de commande 106, 106a, 106b adapté à réaliser soit un réchauffage séquentiel des secteurs soit une alimentation simultanée de certains secteurs.

Les câbles 108a, 108b, 108c, 108d regroupent les arrivées et départs de courants des secteurs qu'ils distribuent.

Dans la figure 8A quatre sections sont représentée, la section 301 correspond à la liaison avec le cockpit, la section 302 est la section dans le pylône du moteur regroupant les boîtiers 107a et 107b de commande du séquençage ou cyclage du système, la section 303 comprend le cheminement de câbles entre le pylône et l'entrée d'air et la section 304 correspond à l'entrée d'air.

La puissance qu'il y a lieu de dissiper pour obtenir un fonctionnement correct en anti-givrage dépend de la position de l'élément chauffant dans l'entrée d'air, la zone la plus critique du profil étant la partie interne de l'entrée d'air à partir du bord d'attaque de la lèvre.

Pour réaliser une fonction anti-givrage d'une telle zone, la puissance à dissiper est une puissance de l'ordre de 1,5W/cm² appliquée en continu.

Pour les zones moins critiques, un fonctionnement en mode de dégivrage, basé sur un cycle de chauffage périodique des surfaces, bien que dissipant une puissance instantanée plus importante de l'ordre de 2 à 3 W/cm² , permettra de limiter la consommation du système.

Dans un tel fonctionnement en mode de dégivrage, le ou les circuits de commande sont agencés pour alimenter et couper les réseaux 103a, 103b ou sous-réseaux 201, ... , 212 selon des cycles temporels 109 définis représentés aux figures 11A et 11B.

Le cycle temporel représenté en figure 11A comprend un passage du courant dans l'élément résistif pendant une durée T0 à T3 entraînant une phase P1 de montée en température, une phase P2 à 0°C de fonte de la glace, une phase P3 de montée en sur-température. Le circuit est ensuite coupé ce qui correspond à une phase P4 de refroidissement.

La figure 11B représente les cycles pour l'ensemble des secteurs, les phases de conduction électrique pour chauffer les éléments résistifs étant réalisées successivement.

Un fonctionnement dans ce mode de dégivrage pourra permettre pour les zones d'entrée d'air de pallier à une déficience d'un des circuits tout en conservant une capacité de dégivrage suffisante.

Le circuit de commande du système représenté à la figure 10 dans le cadre de deux circuits séparés 106a, 106b comporte une série de faisceaux de câbles 108 alimentant l'ensemble des sous-réseaux résistifs.

Ces faisceaux constituent des canaux indépendants reliés aux boîtiers 107a, 107b séparés ou reliés à un boîtier de commande unique lui même relié par un bus 115 à un boîtier 113 de surveillance et de communication avec le tableau de bord 114 pour l'affichage des paramètres de fonctionnement et la commande du système.

Comme vu précédemment, l'alimentation des réseaux de réchauffeurs d'une nacelle est réalisée avec deux réseaux de câbles 108, 108a, 108b, 108c d'alimentation indépendants et des jeux de connecteurs électriques dédiés.

Les câbles de chaque réseau sont installés de manière à être complètement séparés de ceux de l'autre réseau, de façon à minimiser les risques de panne commune des circuits.

Le système décrit optimise la consommation de puissance du fait que les circuits de commande sont agencés pour alimenter et couper les réchauffeurs selon des cycles temporels définis en fonction de la phase de vol ou des conditions d'utilisation du système.

Le ou les boîtiers 107a, 107b assurent la surveillance des réseaux de câbles et de réchauffeurs à réseaux résistifs, assurent que les tensions et intensités électriques délivrées sont convenables et en assurent la surveillance du système en mesurant l'absence de court circuit ou de circuits ouverts intempestifs.

De même les circuits d'alimentation des boîtiers, par exemple au travers de barres d'alimentation reliées à des sources de tension continue 116a, 116b et des sources de tension alternative 117a, 117b, sont indépendants. En outre, pour accroître la redondance, chaque boîtier est alimenté par deux barres d'alimentation indépendantes.

A un instant donné, chaque canal ou boîtier utilise la même barre d'alimentation électrique afin que en cas de problème d'isolation électrique entre les deux réseaux de réchauffeurs, une seule des barres d'alimentation ne soit affectée.

Notamment en cas de perte d'une des barres d'alimentation sur un des boîtiers ou canaux, les deux boîtiers ou canaux utiliseront l'autre barre d'alimentation.

Pour commander le système selon l'invention, on segmente l'entrée d'air en une succession de secteurs de dégivrage, on commande une succession de réseaux résistifs 201, ..., 212 disposés dans les secteurs de dégivrage par au moins un circuit de commande 106, 106a, 106b adapté à alimenter simultanément ou séquentiellement lesdits secteurs.

Selon l'emplacement des sous-réseaux on peut préférer un fonctionnement en dégivrage ou en anti-givrage.

On réalise une phase d'anti-givrage 110 en commandant en continu au moins un secteur de dégivrage alors qu'on réalise une phase de dégivrage 111 au moyen d'un cycle de chauffage périodique d'au moins un secteur.

La figure 9A représente un mode de fonctionnement pour lequel la partie externe de la nacelle est commandée en dégivrage avec une alimentation séquentielle des secteurs et pour lequel la pointe de la lèvre d'entrée d'air et la partie tubulaire d'entrée d'air sont pilotées en anti-givrage par une alimentation en continue des réseaux résistifs disposés dans cette partie.

La figure 9B représente un mode de fonctionnement pour lequel la partie externe de la nacelle et la partie tubulaire d'entrée d'air sont alimentées en séquences de dégivrage, seule la pointe de la lèvre d'entrée d'air étant alimentée en mode d'anti-givrage.

L'invention ne se limite pas aux exemples représentés et notamment les modes de fonctionnement peuvent être modifiés pour privilégier le fonctionnement en anti-givrage ou le fonctionnement en dégivrage selon les conditions de vol, l'état du système ou la puissance disponible, les réseaux ségrégués pouvant être séparés latéralement pour couvrir des zones consécutives comme en figure 7B, des zones espacées ou être disposés empilés ou comporter des combinaisons de ces dispositions.

## Revendications

1. Nacelle (1) de moteur d'aéronef, comportant une entrée d'air (2) pourvue d'une lèvre (3) suivie d'une pièce tubulaire (4) d'entrée d'air, munie d'un premier panneau (5) d'atténuation acoustique, pour lequel la lèvre (3) est munie d'un système de dégivrage et d'anti-givrage comportant des moyens de dégivrage (6, 6a, 6b, 6c, 6d) constitués par des réseaux d'éléments résistifs (102) chauffants, recouvrant une partie (3b) de la lèvre interne à l'entrée d'air et s'étendant d'une part sur au moins une partie (3a) de la lèvre externe à l'entrée d'air, et, d'autre part, sur au moins une zone de jonction (7a, 7b, 7c) entre la lèvre et le premier panneau (5) d'atténuation acoustique de la pièce tubulaire d'entrée d'air,
pour lequel les moyens de dégivrage (6d) s'étendent au delà de la zone de jonction pour recouvrir au moins une partie du premier panneau (5) d'atténuation acoustique de la pièce tubulaire d'entrée d'air,
et pour lequel l'entrée d'air est segmentée en une succession de secteurs de dégivrage constituant une succession de sous-réseaux (201, ... , 212) pilotés par au moins un circuit de commande (106, 106a, 106b) adapté à réaliser soit un réchauffage séquentiel des secteurs soit une alimentation simultanée de certains secteurs,
**caractérisé en ce que** les réseaux d'éléments résistifs sont noyés dans un matériau isolant (101) électrique, les moyens de dégivrage étant sous forme de tapis (103a, 103b) incorporant les éléments résistifs (102) formant partie de la paroi de la lèvre et percés de trous pour permettre le fonctionnement du panneau d'atténuation acoustique en laissant un taux de surfaces ouvertes compatible avec l'atténuation acoustique désirée.

2. Nacelle de moteur d'aéronef selon la revendication 1 **caractérisée en ce que** la zone de jonction (7a, 7b, 7c) comporte une avancée (8) de la pièce tubulaire d'entrée d'air solidarisée à un bord interne d'un prolongement de la lèvre (3), les moyens de dégivrage (6c) recouvrant ladite avancée (8).

3. Nacelle de moteur d'aéronef selon la revendication 1 ou 2 **caractérisée en ce que** la pièce tubulaire (4) est réalisée en matériaux composites et comporte une peau externe (4a) et une peau interne (4b) enserrant un matériau d'atténuation acoustique pour former ledit premier panneau (5) d'atténuation acoustique, l'avancée (8) étant constituée d'un bord pincé des peaux externe et interne (4a, 4b).

4. Nacelle de moteur d'aéronef selon l'une des revendications 1 à 3 **caractérisée en ce qu'**un second panneau d'atténuation acoustique (9) est disposé sûr la partie (3b) de la lèvre interne à l'entrée d'air.

5. Nacelle de moteur d'aéronef selon l'une des revendications 1 à 3 **caractérisée en ce que** la lèvre (3) est constituée d'un capot supérieur (10) formant l'extrado (12) de l'entrée d'air et se prolongeant au delà du bord d'attaque (11) de la lèvre, la pièce tubulaire (4) d'entrée d'air munie du premier panneau d'atténuation acoustique se prolongeant pour former une partie de l'intrado (13) de la lèvre (3).

6. Nacelle de moteur d'aéronef selon l'une des revendications 1 à 3 **caractérisée en ce que** la lèvre (3) est constituée d'un prolongement de la pièce tubulaire d'entrée d'air se prolongeant pour former l'intrado (13), le bord d'attaque (II) et l'extrado (12) de la lèvre (3).

7. Nacelle de moteur d'aéronef selon l'une des revendications 1 à 6 **caractérisée en ce que** la pièce tubulaire d'entrée d'air (4) et les panneaux d'atténuation acoustique (5, 9) sont réalisés en matériaux composites.

8. Nacelle de moteur d'aéronef selon l'une quelconque des revendications 1 à 7 **caractérisée en ce que** les secteurs des moyens de dégivrage (6, 6a, 6b, 6c, 6d) comportent au moins deux séries d'éléments résistifs superposés en sorte de réaliser deux réseaux (103a, 103b) ségrégués intégrés dans l'épaisseur des panneaux à dégivrer.

9. Nacelle de moteur d'aéronef selon la revendication 8 **caractérisé en ce que** l'entrée d'air est segmentée en une succession de secteurs de dégivrage constituant une succession de sous-réseaux (201, ... , 212) pilotés par au moins deux circuits de commande indépendants (106, 106a, 106b) adaptés à réaliser soit un réchauffage séquentiel des secteurs soit une alimentation simultanée de certains secteurs.

10. Nacelle de moteur d'aéronef selon la revendication 9 **caractérisé en ce que** lesdits circuits de commande sont agencé pour alimenter et couper les réseaux (103a, 103b) ou sous-réseaux (201, ... , 212) selon des cycles temporels (109) définis.

11. Nacelle de moteur d'aéronef selon la revendication 9 ou 10 **caractérisé en ce que** les circuits de commande sont regroupés dans un boîtier de commande unique.

12. Nacelle de moteur d'aéronef selon l'une des revendications 9 à 11 **caractérisé en ce que** les circuits de commande comportent des boîtiers de commande (107a, 107b) agencés pour assurer la surveillance des réseaux résistifs et des câbles (108) les alimentant, et comportent des moyens de mesure des tensions et intensités électriques délivrées et de mesure de l'absence de court circuit ou de circuits ouverts intempestifs.

13. Procédé de commande d'un système de dégivrage et d'anti-givrage d'une entrée d'air de nacelle de moteur d'aéronef selon l'une des revendications 1 à 8 **caractérisé en ce qu'**on segmente l'entrée d'air en une succession de secteurs de dégivrage, on commande une succession de réseaux résistifs (201, ..., 212) disposés dans les secteurs de dégivrage par au moins un circuit de commande (106, 106a, 106b) adapté à alimenter simultanément ou séquentiellement lesdits secteurs.

14. Procédé de commande d'un système de dégivrage et d'anti-givrage selon la revendication 13 **caractérisé en ce qu'**on réalise une phase d'anti-givrage (110) en commandant en continu au moins un secteur de dégivrage.

15. Procédé de commande d'un système de dégivrage et d'anti-givrage selon la revendication 13 **caractérisé en ce qu'**on réalise une phase de dégivrage (111) au moyen d'un cycle de chauffage périodique d'au moins un secteur.

## Claims

1. An aircraft engine pod (1) comprising an air intake (2) provided with a lip (3) followed by a tubular air intake piece (4) equipped with a first acoustic attenuation panel (5), in which the lip (3) is equipped with a a system for deicing and preventing icing comprising deicing means (6, 6a, 6b, 6c, 6d) consisting of arrays of resistive heating elements (102), covering part (3b) of the lip, internal to the air intake, and extending, on the one hand, over at least part (3a) of the lip external to the air intake and, on the other hand, over at least one junction region (7a, 7b, 7c) where the lip and the first acoustic attenuation panel (5) of the tubular air intake piece meet,
for which the deicing means (6d) extend beyond the junction region to cover at least part of the first acoustic attenuation panel (5) of the tubular air intake piece,
and for which the air intake is divided into a succession of deicing sectors which form a succession of subarrays (201, ..., 212) controlled by at least one control circuit (106, 106a, 106b) designed either to heat the sectors in sequence or to deliver power to certain sectors simultaneously,
**characterized in that** the arrays of resistive heating elements are embedded in an electrically insulating material (101), the deicing means being in the form of a mat (103a, 103b) incorporating the resistive elements (102) being part of the air intake lip and pierced with holes to allow the acoustic attenuation panel to work by leaving a proportion of open surfaces compatible with the desired acoustic attenuation.

2. Aircraft engine pod as claimed in claim 1, **characterized in that** the junction region (7a, 7b, 7c) comprises a projection (8) of the tubular air intake piece secured to an internal edge of a continuation of the lip (3), the deicing means (6c) covering said projection (8).

3. Aircraft engine pod as claimed in claim 1 or 2, **characterized in that** the tubular piece (4) is made of composite materials and comprises an outer skin (4a) and an inner skin (4b) sandwiching an acoustic attenuation material to form said first acoustic attenuation panel (5), the projection (8) consisting of a pinched-together edge of the outer and inner skins (4a, 4b).

4. Aircraft engine pod as claimed in one of claims 1 to 3, **characterized in that** a second acoustic attenuation panel (9) is positioned on the part (3b) of the lip internal to the air intake.

5. Aircraft engine pod as claimed in one of claims 1 to 3, **characterized in that** the lip (3) consists of an upper cowl (10) that forms the suction face (12) of the air intake and continues beyond the leading edge (11) of the lip, the tubular air intake piece (4) equipped with the first acoustic attenuation panel being extended to form part of the pressure face (13) of the lip (3).

6. Aircraft engine pod as claimed in one of claims 1 to 3, **characterized in that** the lip (3) consists of a continuation of the tubular air intake piece which continues to form the pressure face (13), the leading edge (11) and the suction face (12) of the lip (3).

7. Aircraft engine pod as claimed in one of claims 1 to 6, **characterized in that** the tubular air intake piece (4) and the acoustic attenuation panels (5, 9) are made of composite.

8. Aircraft engine pod as claimed in one of claims 1 to 7, **characterized in that** the sectors of the deicing means (6, 6a, 6b, 6c, 6d) comprise at least two series of resistive elements stacked in order to realize two segregated arrays (103a, 103b) incorporated into the thickness of a panel that is to be deiced.

9. Aircraft engine pod as claimed in claim 8, **characterized in that** the air intake is divided into a succession of deicing sectors which form a succession of subarrays (201, ..., 212) controlled by at least two independent control circuits (106, 106a, 106b) designed either to heat the sectors in sequence or to deliver power to certain sectors simultaneously.

10. Aircraft engine pod as claimed in claim 9, **characterized in that** said control circuits are designed to deliver and cut off power to the arrays (103a, 103b) or subarrays (201, ..., 212) according to defined time cycles (109).

11. Aircraft engine pod as claimed in claim 9 or 10, **characterized in that** the control circuits are combined into a single control unit.

12. Aircraft engine pod as claimed in one of claims 9 to 11, **characterized in that** the control circuits comprise control units (107a, 107b) designed to monitor the resistive arrays and the wiring (108) delivering power to them and comprise means for measuring the electrical voltages and currents supplied and for measuring the absence of unintended short circuits or unintended open circuits.

13. A method of controlling a deicing and anti-icing system for an aircraft engine pod air intake as claimed in one of claims 1 to 8, **characterized in that** the air intake is divided into a succession of deicing sectors, a succession of resistive arrays (201, ..., 212) positioned in the deicing sectors are controlled by at least one control circuit (106, 106a, 106b) designed to deliver power to said sectors simultaneously or in sequence.

14. The method of controlling a deicing and anti-icing system as claimed in claim 13, **characterized in that** an anti-icing phase (110) is carried out by operating at least one deicing sector continuously.

15. The method of controlling a deicing and anti-icing system as claimed in claim 13, **characterized in that** a deicing phase (111) is carried out by means of a cycle involving periodic heating of at least one sector.

## Patentansprüche

1. Luftfahrzeugtriebwerksrumpf (1) mit einem Lufteinlass (2), der mit einer Lippe (3), gefolgt von einem röhrenförmigen Lufteinlassstück (4) versehen ist, das mit einer ersten Schalldämpfungsplatte (5) versehen ist, wobei die Lippe (3) mit einem Enteisungs- und Vereisungsschutzsystem mit Enteisungsmitteln (6, 6a, 6b, 6c, 6d) versehen ist, die aus Netzen von Heizwiderstandselementen (102) bestehen, die einen Abschnitt (3b) der Lippe innerhalb des Lufteinlasses bedecken und sich einerseits auf mindestens einem Abschnitt (3a) der Lippe außerhalb des Lufteinlasses und andererseits in mindestens einer Verbindungszone (7a, 7b, 7c) zwischen der Lippe und der ersten Schalldämpfungsplatte (5) des röhrenförmigen Lufteinlassstücks erstrecken,
wobei sich die Enteisungsmittel (6d) über die Verbindungszone hinaus erstrecken, um mindestens einen Abschnitt der ersten Schalldämpfungsplatte (5) des röhrenförmigen Lufteinlassstücks zu bedecken,
und wobei der Lufteinlass in eine Folge von Enteisungssektoren segmentiert ist, die eine Folge von Unternetzen (201, ..., 212) bilden, die durch mindestens eine Steuerschaltung (106, 106a, 106b) gesteuert werden, die dazu ausgelegt ist, entweder eine sequentielle Erwärmung der Sektoren oder eine gleichzeitige Speisung bestimmter Sektoren auszuführen,
**dadurch gekennzeichnet, dass** die Netze von Widerstandselementen in ein elektrisches Isolationsmaterial (101) eingebettet sind, wobei die Enteisungsmittel in Form von Matten (103a, 103b) vorliegen, die die Widerstandselemente (102) einschließen, die einen Abschnitt der Wand der Lippe bilden und mit Löchern versehen sind, um die Funktion der Schalldämpfungsplatte zu ermöglichen, indem ein Prozentsatz von Oberflächen offen gelassen ist, der mit der gewünschten Schalldämpfung kompatibel ist.

2. Luftfahrzeugtriebwerksrumpf nach Anspruch 1, **dadurch gekennzeichnet, dass** die Verbindungszone (7a, 7b, 7c) einen Vorsprung (8) des röhrenförmigen Lufteinlassstücks umfasst, der mit einem inneren Rand einer Verlängerung der Lippe (3) fest verbunden ist, wobei die Enteisungsmittel (6c) den Vorsprung (8) bedecken.

3. Luftfahrzeugtriebwerksrumpf nach Anspruch 1 oder 2, **dadurch gekennzeichnet, dass** das röhrenförmige Stück (4) aus Verbundmaterialien hergestellt ist und eine Außenhaut (4a) und eine Innenhaut (4b) umfasst, die ein Schalldämpfungsmaterial umschließen, um die erste Schalldämpfungsplatte (5) zu bilden, wobei der Vorsprung (8) aus einem Rand gebildet ist, der von der Außen- und der Innenhaut (4a, 4b) eingeklemmt ist.

4. Luftfahrzeugtriebwerksrumpf nach einem der Ansprüche 1 bis 3, **dadurch gekennzeichnet, dass** eine zweite Schalldämpfungsplatte (9) an dem Abschnitt (3b) der Lippe innerhalb des Lufteinlasses angeordnet ist.

5. Luftfahrzeugtriebwerksrumpf nach einem der Ansprüche 1 bis 3, **dadurch gekennzeichnet, dass** die Lippe (3) aus einer oberen Haube (10) gebildet ist, die die Saugseite (12) des Lufteinlasses bildet und sich über die Vorderkante (11) der Lippe hinaus verlängert, wobei sich das röhrenförmige Lufteinlassstück (4), das mit der ersten Schalldämpfungsplatte versehen ist, verlängert, um einen Teil der Druckseite (13) der Lippe (3) zu bilden.

6. Luftfahrzeugtriebwerksrumpf nach einem der Ansprüche 1 bis 3, **dadurch gekennzeichnet, dass** die Lippe (3) aus einer Verlängerung des röhrenförmigen Lufteinlassstücks gebildet ist, das sich verlängert, um die Druckseite (13), die Vorderkante (11) und die Saugseite (12) der Lippe (3) zu bilden.

7. Luftfahrzeugtriebwerksrumpf nach einem der Ansprüche 1 bis 6, **dadurch gekennzeichnet, dass** das röhrenförmige Lufteinlassstück (4) und die Schalldämpfungsplatten (5, 9) aus Verbundmaterialien hergestellt sind.

8. Luftfahrzeugtriebwerksrumpf nach einem der Ansprüche 1 bis 7, **dadurch gekennzeichnet, dass** die Sektoren der Enteisungsmittel (6, 6a, 6b, 6c, 6d) mindestens zwei Reihen von überlagerten Widerstandselementen umfassen, um zwei gesonderte Netze (103a, 103b) zu verwirklichen, die in die Dicke der zu enteisenden Platten integriert sind.

9. Luftfahrzeugtriebwerksrumpf nach Anspruch 8, **dadurch gekennzeichnet, dass** der Lufteinlass in eine Folge von Enteisungssektoren segmentiert ist, die eine Folge von Unternetzen (201, ..., 212) bilden, die durch mindestens zwei unabhängige Steuerschaltungen (106, 106a, 106b) gesteuert werden, die dazu ausgelegt sind, entweder eine sequentielle Erwärmung der Sektoren oder eine gleichzeitige Speisung von bestimmten Sektoren auszuführen.

10. Luftfahrzeugtriebwerksrumpf nach Anspruch 9, **dadurch gekennzeichnet, dass** die Steuerschaltungen zum Versorgen und Abtrennen der Netze (103a, 103b) oder Unternetze (201, ..., 212) gemäß definierten Zeitzyklen (109) eingerichtet sind.

11. Luftfahrzeugtriebwerksrumpf nach Anspruch 9 oder 10, **dadurch gekennzeichnet, dass** die Steuerschaltungen in einem einzelnen Steuergehäuse zusammengefasst sind.

12. Luftfahrzeugtriebwerksrumpf nach einem der Ansprüche 9 bis 11, **dadurch gekennzeichnet, dass** die Steuerschaltungen Steuergehäuse (107a, 107b) umfassen, die zum Sicherstellen der Überwachung der Widerstandsnetze und der Kabel (108), die sie speisen, eingerichtet sind, und Mittel zum Messen der gelieferten elektrischen Spannungen und Intensitäten und zum Messen der Abwesenheit eines Kurzschlusses oder von unangebrachten Leerlaufschaltungen umfassen.

13. Verfahren zum Steuern eines Enteisungs- und Vereisungsschutzsystems eines Lufteinlasses eines Luftfahrzeugtriebwerksrumpfs nach einem der Ansprüche 1 bis 8, **dadurch gekennzeichnet, dass** der Lufteinlass in eine Folge von Enteisungssektoren segmentiert wird, eine Folge von Widerstandsnetzen (201, ..., 212), die in den Enteisungssektoren angeordnet sind, durch mindestens eine Steuerschaltung (106, 106a, 106b) gesteuert wird, die dazu ausgelegt ist, die Sektoren gleichzeitig oder sequentiell zu speisen.

14. Verfahren zum Steuern eines Enteisungs- und Vereisungsschutzsystems nach Anspruch 13, **dadurch gekennzeichnet, dass** eine Vereisungsschutzphase (110) durch kontinuierliches Steuern mindestens eines Enteisungssektors ausgeführt wird.

15. Verfahren zum Steuern eines Enteisungs- und Vereisungsschutzsystems nach Anspruch 13, **dadurch gekennzeichnet, dass** eine Enteisungsphase (111) mittels eines periodischen Heizzyklus mindestens eines Sektors ausgeführt wird.
